# EUROPÄISCHE PATENTSCHRIFT

(11) **EP 0 493 752 B1**
(45) Veröffentlichungstag und Bekanntmachung des Hinweises auf die Patenterteilung: **10.07.1996**
(21) Anmeldenummer: 91121849.3
(22) Anmeldetag: 19.12.1991
(51) Int. Cl.: C21B 13/14

(54) **Verfahren und Vorrichtung zur Rückführung von heissen Stäuben**
Process and apparatus for reinjecting hot dusts
Procédé et appareil pour la réinjection des poussières chaudes

(30) Priorität: 27.12.1990 DE 4041936
(43) Veröffentlichungstag der Anmeldung: 08.07.1992
(73) Patentinhaber: DEUTSCHE VOEST-ALPINE INDUSTRIEANLAGENBAU GMBH, D-40094 Düsseldorf (DE); VOEST-ALPINE INDUSTRIEANLAGENBAU GESELLSCHAFT m.b.H., A-4020 Linz (AT)
(72) Erfinder: Mayr, Herbert, A-4481 Asten (AT); Hauk, Rolf, Dr., W-7590 Achern (DE); Vuletic, Bodgan, Dipl.-Ing., W-4000 Düsseldorf 1 (DE); Kepplinger, Werner, Dr., A-4060 Leonding (AT)
(74) Vertreter: Pfenning, Meinig & Partner

(56) Entgegenhaltungen:
- AT-B- 381 116
- DE-B- 2 141 898
- DE-C- 393 557
- DE-C- 947 713
- DE-C- 966 192
- LU-A- 79 611
- US-A- 3 178 165
- PATENT ABSTRACTS OF JAPAN vol. 14, no. 202 (C-713)(4145) 25. April 1990 & JP-A-2 043 308 (SUMITOMO METAL IND) 13. Februar 1990
- PATENT ABSTRACTS OF JAPAN vol. 8, no. 184 (C-239)(1621) 23. August 1984 & JP-A-59 076 808 (KAWASAK SEITETSU) 2. Mai 1984

## Beschreibung

Die Erfindung betrifft ein Verfahren und eine Vorrichtung zur Rückführung von heißen Stäuben.

Derartige Rückführungen von heißen Stäuben finden bei der Herstellung von flüssigem Roheisen oder Stahlprodukten aus eisenhaltigem Material oder bei der Vergasung von Kohle Anwendung.

In der AT-PS 381 116 ist ein Verfahren beschrieben, welches bei Verwendung von minderwertiger Kohle eine zusätzliche Wärmezuführung durch Verbrennen von aus dem Reduktionsgas abgeschiedenen Kohleteilchen vorsieht.

Gemäß einer Vorrichtung zur Durchführung dieses Verfahrens sind am Einschmelzvergaser Brenner in mindestens zwei übereinanderliegenden horizontalen Ebenen kranzförmig angeordnet.

Die Brenner sind mit einem Staubvorratsbehälter und mit Treibgasleitungen verbunden. Der Staubvorratsbehälter ist mit einem Heißzyklon verbunden, in welchem Reduktionsrohgas eingeleitet und von Feststoffen, die hauptsächlich aus Kohleteilchen bestehen, befreit wird.

Nachteilig an dieser Lösung ist, daß im Falle von Verstopfungen im Brennersystem ein Rückfluß von Gas in dem Bereich mit niedrigerem Druckniveau erfolgt, andererseits stets die Gefahr besteht, daß durch die Injektorwirkung Gas und Staub angesaugt wird.

Da sich die Vorgänge auf einem Temperaturniveau von ca. 800° C abspielen und der Staub aufgrund seiner Konsistenz, insbesondere der Kokspartikel, eine stark abrasive Wirkung hat, sind Verschleißerscheinungen und dadurch bedingte Störungen im System nicht zu vermeiden.

Der US-A-3178165 ist eine Vorrichtung zum Einbringen von Kohle in Partikelform in einen Hochofen zu entnehmen. Bei dieser Vorrichtung wird die Kohle über Ventile, die vor oder nach Behältern angebracht sind, einem Förderrad zugeführt und von diesem über eine Druckleitung und Düsen in den Hochofen eingebracht. Hierbei sind die Behälter über ein Leitungssystem mit dem Hochdruckleitungsteil, der sich vor dem Hochofen befindet, verbunden. Über die Ventile wird der Druck in den Behältern je nach Bedarf eingestellt, um die Kohle von einem Bereich, der unter höherem Druck steht, in einen Bereich, der einen niedrigeren Druck aufweist, gefördert wird, bis die Kohle in den Bereich des Förderrades kommt und von dort durch dessen Drehung und geförderte Luft in den Hochofen eingebracht wird. Dabei ist der Druck in der Leitung vor dem Hochofen größer als im Inneren des Ofens.

In der DE-B-21 41 898 ist eine Vorrichtung beschrieben mit der teilchenförmiges reduzierbares Metallerz allein unter Schwerkraftwirkung in einen Reduktionsreaktor eingebracht werden soll. Das Erz wird in einen oberhalb des Reaktors angeordneten Trichter eingegeben und gelangt durch den Drucktrichter in den Reaktor. Gesteuert wird dies mit den Ventilen, die sich vor und nach einem Drucktrichter befinden.

Der Erfindung liegt daher die Aufgabe zugrunde, ein Verfahren und eine Vorrichtung der im Oberbegriff des Anspruchs 1 und 2 genannten Art dahingehend weiterzuentwickeln und zu verbessern, daß eine Rückführung von Heißen Stäuben geschaffen wird, welche die Verschleißerscheinungen im Rückführungssystem minimiert.

Diese Aufgabe wird erfindungsgemäß durch ein Verfahren und eine Vorrichtung gelöst, welche ein Schleusensystem und hierin integriert neuartige Funktionselemente beinhaltet, wodurch ein Rückfluß bzw. eine Ansaugung von Gas und Staub verhindert und eine Absperrung der Staubzufuhr ermöglicht wird.

Die Lösung dieser Aufgabe wird für das vorliegende Verfahren erfindungsgemäß durch die Merkmale des Anspruches 1, für die vorliegende Vorrichtung durch die Merkmale des Anspruches 2 im Zusammenhang mit den Unteransprüchen erreicht.

Das im Einschmelzvergaser anfallende Reduktionsrohgas wird in einen Heißgaszyklon eingeleitet und von den Feststoffen befreit. Der hauptsächlich aus Koks und Eisenpartikeln bestehende Staub wird abgeschieden.

Aus dem Heißgaszyklon wird der heiße Staub über ein Schleusensystem zum Brenner transportiert. Das Schleusensystem zur Überwindung der Druckdifferenz zwischen Heißgaszyklon und Einschmelzvergaser besteht aus Staubbunkern, Heißstaubschiebern sowie einer Zellenradschleuse als Dosierorgan zum Injektor und dem Brenner.

Für Reparatur- und Wartungszwecke sind Messerschieber als Absperrorgane installiert. Die Beförderung des heißen Staubes erfolgt über das Schleusensystem von einer Zone niedrigeren Druckes im Heißgaszyklon zu einer Zone höheren Druckes an den am Einschmelzvergaser angeordneten Brennern. Das Schleusensystem verhindert einen Rückfluß bzw. eine Ansaugung von Gas und Staub und ermöglicht die Absperrung der Staubzufuhr. Aufgrund der hohen Temperaturen und der Druckdifferenz zwischen dem Heißgaszyklon und den Brennern am Einschmelzvergaser wurden die Heißstaubschieber bevorzugt mit einer Wasserkühlung versehen und durch eine Beschichtung der Dichtflächen mit Hart- oder Sintermetall so ausgebildet, daß sie einerseits sicher abdichten und andererseits der abrasiven Wirkung der beförderten Stäube standhalten. Der Heißgaszyklon ist zweckmäßigerweise als Schweißkonstruktion aus Stahlblech mit Ausmauerung ausgebildet.

Die Staubbunker sind Druckbehälter aus Blech mit Ausmauerung. In den Staubbunkern sind zur Ermittlung der Füllstandshöhe des Staubes radioaktive Meßsonden angeordnet.

Die Heißstaubschieber sind über eine gefräste Labyrinth-Ausbildung zur verlustarmen Wasserführung des Kühlwassers über ihr Gehäuse sowie durch unmittelbare Kühlung der Schieberwelle wassergekühlt.

Der Schieberteller der Heißstaubschieber wird mittels pneumatischer Zylinder bewegt. Die Schieberwelle ist mit Kugelsitz und Stopfbuchse gelagert. Schieberteller und Gleitbahnen für den Schieberteller sind mit Hart- oder Sintermetall beschichtet.

Die Zellenradschleuse weist eine komplette Wasserkühlung von Gehäuse, Rotor und Zellenrad auf. Der Rotor der Zellenradschleuse ist konisch ausgebildet und weist eine Schweißpanzerung aus hochwarmfester Kobalt-Hartlegierung auf. Weiterhin ist der Rotor zur Gewährleistung der Dichtigkeit nachstellbar.

Die Brenner sind direkt am Einschmelzvergaser angeordnet und vergasen den heißen Staub mittels Sauerstoff. Die Brenner sind komplett wassergekühlt.

Die verbindenden Rohrstücke sind mit hitzbeständigen Innenrohren mit Keramikschnurummantelung ausgestattet.

Im Normalbetrieb der Rückführung der heißen Stäube sind die Messerschieber und der Kugelhahn geöffnet. Sie werden lediglich zu Zwecken der Wartung oder im Reparaturfall geschlossen.

Die Erfindung wird nachstehend anhand eines Ausführungsbeispieles erläutert. Es zeigen:
- Fig. 1: ein Schema der erfindungsgemäßen Staubrückführung mit Schleusensystem, und
- Fig. 2: eine Schnittdarstellung durch einen erfindungsgemäßen Heißstaubschieber.

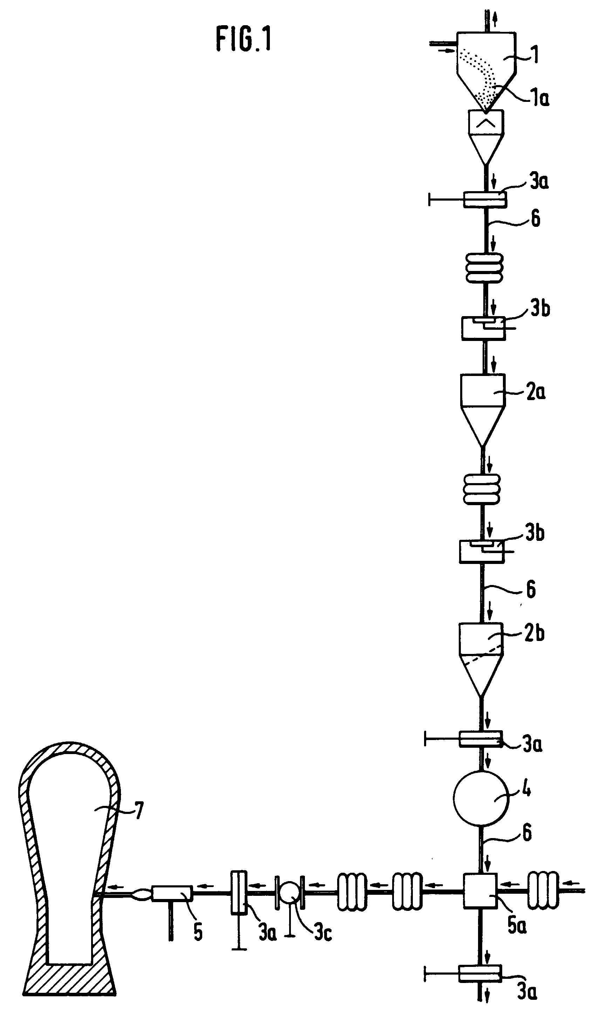

Wie in Fig. 1 dargestellt, wird der ca. 850°C heiße Staub 1a, welcher hauptsächlich aus Koks- und Eisenpartikeln besteht, in dem Heißgaszyklon 1 abgeschieden.

Der Heißgaszyklon 1 ist eine Schweißkonstruktion aus Stahlblech mit Ausmauerung.

Der abgeschiedene Staub la wird über ein Schleusensystem 2a; 2b; 3a; 3b; 3c; 4 zum Brenner 5 transportiert. Das Schleusensystem zur Überwindung der Druckdifferenz von ca. 5 KPa zwischen Heißgaszyklon 1 und Brenner 5 am Einschmelzvergaser 7 besteht aus Staubbunkern 2a und 2b, Heißstaubschiebern 3b, Messerschiebern 3a sowie wenigstens einer Zellenradschleuse 4 und einem Kugelhahn 3c.

Die Beförderung des heißen Staubes erfolgt über das Schleusensystem 2a; 2b; 3a; 3b; 3c; 4 von einer Zone niedrigeren Druckes im Heißgaszyklon 1 zu einer Zone höheren Druckes an die am Einschmelzvergaser 7 angeordneten Brenner 5.

Dem Heißgaszyklon 1 ist ein erster Messerschieber 3a sowie ein erster Heißstaubschieber 3b nachgeordnet. Weitere Messerschieber 3a befinden sich oberhalb und unterhalb der Zellenradschleuse 4 und unmittelbar vor dem Brenner 5.

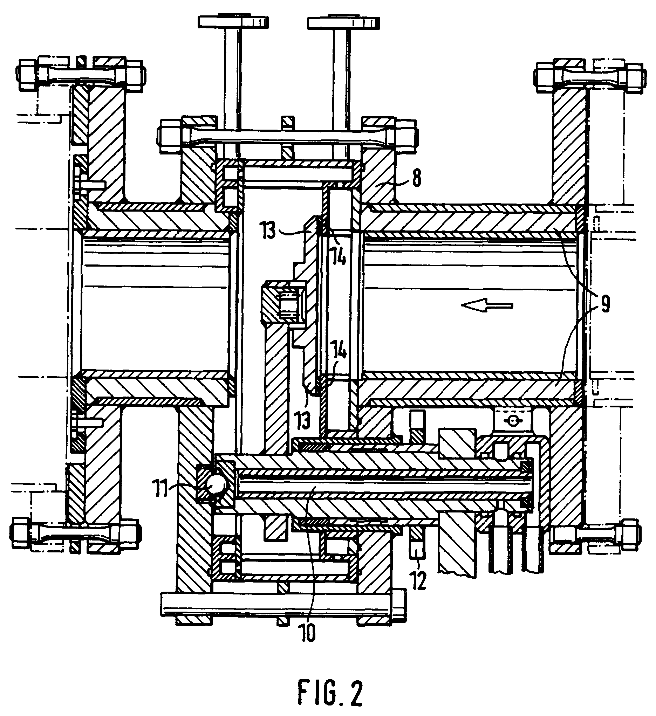

Die Messerschieber 3a und der Kugelhahn 3c sind im Normalbetrieb geöffnet und werden nur zu Wartungs- bzw. Reparaturzwecken geschlossen. Die Heißstaubschieber 3b sind oberhalb und unterhalb des Staubbunkers 2a installiert. Im Zusammenwirken mit den Staubbunkern 2a und 2b und der Zellenradschleuse 4 wirken sie als Schleusensystem, welches den heißen Staub von einer Zone niedrigeren Druckes zu einer Zone höheren Druckes befördert. Der Aufbau des Heißstaubschiebers wird im weiteren anhand von Fig. 2 erläutert.

Über den Messerschieber 3a und den Heißstaubschieber 3b gelangt der heiße Staub in einen ersten Staubbunker 2a, danach in einen zweiten Staubbunker 2b und von dort in die Zellenradschleuse 4.

Die Staubbunker 2a und 2b sind Druckbehälter, welche als Blechkonstruktion mit Ausmauerung ausgeführt sind. Zur Ermittlung und Überwachung des Füllstandes enthalten die Staubbunker 2a und 2b radioaktive Meßsonden. Die oberhalb und unterhalb der Staubbunker 2a und 2b angeordneten Heißstaubschieber 3b operieren automatisch.

Die Zellenradschleuse 4 ist zwischen Injektor 5a und unterem Staubbunker 2b installiert und wirkt als Dosierorgan zum Injektor 5a und Brenner 5. Sie fördert den heißen Staub geregelt zum Injektor 5a, welcher den Staub mittels Treibgas zu den Brennern befördert.

Die Zellenradschleuse 4 erfüllt die Funktion der dosierten Einspeisung des Injektorfördersystems und hat zudem noch eine Abdichtfunktion im Schleusensystem von unten nach oben. Die Zellenradschleuse 4 weist eine komplette Wasserkühlung vom Gehäuse, Rotor und Zellenrad mit Welle auf. Der Rotor ist konisch ausgebildet und mit einer Schweißpanzerung aus einer hochwarmfesten Kobalt-Hartlegierung versehen. Zur dauerhaften Gewährleistung der Dichtigkeit ist der Rotor nachstellbar. Die Brenner 5 sind direkt am Einschmelzgasvergaser 7 angebracht und vergasen den heißen Staub mittels Sauerstoff. Die Brenner 5 sind komplett wassergekühlt.

Aus Gründen der Wärmeisolierung und der Verminderung von Spannungen durch Temperaturwechselbeanspruchung sind die verbindenden Rohrstücke 6 zwischen den oben beschriebenen Elementen der Staubrückführung, wie Heißgaszyklon 1, Staubbehälter 2a und 2b, Messerschieber 3a, Heißstaubschieber 3b, Zellenradschleuse 4, Injektor 5a und Brenner 5, mit hitzebeständigen Innenrohren mit Keramikschnurummantelung ausgestattet.

Fig. 2 zeigt eine Schnittdarstellung durch einen erfindungsgemäßen Heißstaubschieber.

Der Heißstaubschieber 3b ist ein gasdichtes Absperrorgan, welches mittels pneumatischer Zylinder auf und zu bewegt wird. Der Heißstaubschieber 3b besitzt ein Schiebergehäuse 8, welches zum Zwecke der Wasserkühlung und einer verlustarmen Kühlwasserführung mit einer gefrästen Labyrinth-Ausbildung 9 versehen ist. Die Schieberwelle 10 wird ebenfalls wassergekühlt. Die Lagerung der Schieberwelle 10 erfolgt über Kugelsitz 11 und Stopfbuchse 12. Die Bewegung des Schiebertellers 13 erfolgt über pneumatische Zylinder. Der Schieberteller 13 und die Gleitbahnen 14 für den Schieberteller 13 sind gegen Verschleiß und für die Gewährleistung der Gasdichtheit mit Hart- oder Sintermetall beschichtet. Die Zu- und Ablaufstutzen der Heißstaubschieber sind mit Innenrohren aus hitzebeständigem Stahl und Keramikschnurummantelung versehen.

## Patentansprüche

1. Verfahren zur Rückführung von heißen Stäuben aus einem Vergaser oder Einschmelzvergaser über einen in ein Rohrleitungssysten integrierten Heißzyklon sowie Staubbunker,
dadurch **gekennzeichnet,**
daß der heiße Staub (1a) aus dem Heißgaszyklon (1), eine Zone mit niedrigerem Druck, über ein Schleusensystem (2a; 2b; 3a; 3b; 4) dem Einschmelzvergaser (7) die Druckdifferenz zum Einschmelzvergaser (7) überwindend, mit einem Injektor (5a) über Brenner (5) zugeführt wird, wobei das Schleusensystem der Reihe nach einen oberen Staubbunker (2a) und einen unteren Staubbunker (2b) und eine Zellenradschleuse (4) aufweist, und die voneinander durch Schieber (3a, 3b) trennbar sind.

2. Vorrichtung zur Rückführung von heißen Stäuben aus einem Einschnelzvergaser über einen in ein Rohrleitungssystem integrierten Heißzyklon sowie Staubbunker,
**gekennzeichnet** dadurch,
daß zwischen dem Heißgaszyklon (1) und einem Brenner (5), welcher am Einschnelzvergaser (7) angeordnet ist, ein Schleusensystem, vorgesehen ist, welches der Reihe nach einer oberen Staubbunker (2a),einer unteren Staubbunker (2b) und eine Zellenradschleuse (4) aufweist, wobei dazwischen Schieber (3a, 3b) angeordnet sind.

3. Vorrichtung nach Anspruch 2,
gekennzeichnet dadurch, daß der Heißgaszyklon (1) als Schweißkonstruktion aus Stahlblech mit Ausmauerung ausgebildet ist.

4. Vorrichtung nach Anspruch 2,
gekennzeichnet dadurch, daß der obere Staubbunker (2a) und der untere Staubbunker (2b) als Druckbehälter ausgebildet sind, wobei der Druckbehälter aus einer Blechkonstruktion mit Ausmauerung gebildet wird.

5. Vorrichtung nach Anspruch 4,
gekennzeichnet dadurch, daß in den Staubbunkern (2a; 2b) radioaktive Meßsonden zur Ermittlung der Füllstandshöhe des Staubes (1a) angeordnet sind.

6. Vorrichtung nach Anspruch 2,
gekennzeichnet dadurch, daß der Heißstaubschieber (3b) ein Schiebergehäuse (8) mit gefräster Labyrinth-Ausbildung (9) zur verlustarmen Wasserführung des Kühlwassers aufweist.

7. Vorrichtung nach Anspruch 2 und 6,
gekennzeichnet dadurch, daß der Heißstaubschieber (3b) eine wassergekühlte Schieberwelle (10) aufweist und der Schieberteller (13) mittels pneumatischer Zylinder bewegt wird.

8. Vorrichtung nach Anspruch 2,
gekennzeichnet dadurch, daß der Heißstaubschieber (3b) eine Schieberwelle (10) aufweist, welche mit Kugelsitz (11) und Stopfbuchse (12) gelagert ist.

9. Vorrichtung nach Anspruch 2,
gekennzeichnet dadurch, daß der Heißstaubschieber (3b) einen Schieberteller (13) und Gleitbahnen (14) für den Schieberteller (13) aufweist, wobei der Schieberteller (13) und die Gleitbahnen (14) mit Hart- oder Sintermetall beschichtet sind.

10. Vorrichtung nach Anspruch 2 und 6,
gekennzeichnet dadurch, daß die Zu- und Ablaufstutzen des Heißstaubschiebers (3b) mit Innenrohren aus hitzebeständigem Stahl mit Keramikschnurummantelung versehen sind.

11. Vorrichtung nach Anspruch 2,
gekennzeichnet dadurch, daß die Zellradschleuse (4) eine komplette Wasserkühlung von Gehäuse, Rotor und Zellenrad mit Welle aufweist.

12. Vorrichtung nach Anspruch 11,
gekennzeichnet dadurch, daß der Rotor konisch ausgebildet und mit einer Schweißpanzerung aus hochwarmfester Kobalt-Hartlegierung versehen ist.

13. Vorrichtung nach Anspruch 11 und 12,
gekennzeichnet dadurch, daß der Rotor zur Beibehaltung der Dichtigkeit nachstellbar ist.

14. Vorrichtung nach Anspruch 2,
gekennzeichnet dadurch, daß die Brenner (5) komplett wassergekühlt sind.

15. Vorrichtung nach Anspruch 2,
gekennzeichnet dadurch, daß die verbindenden Rohrstücke (6) mit hitzebeständigen Innenrohren mit Keramikschnurummantelung ausgestattet sind.

## Claims

1. Method for the recycling of hot dusts from a gasifier or melt-down gasifier by way of a hot cyclone and dust bunkers, which are integrated into a pipeline system, characterized in that the hot dust (1a) from the hot-gas cyclone (1), which is a zone of lower pressure, is fed by way a sluice system (2a; 2b; 3a; 3b; 4) to the melt-down gasifier (7) by means of an injector (5a) by way of burners (5) so as to overcome the pressure difference relative to the melt-down gasifier (7), the sluice system having in succession an upper dust bunker (2a) and a lower dust bunker (2b) and a cellular-wheel sluice (4), which can be separated from one another by means of slides (3a, 3b).

2. Apparatus for the recycling of hot dusts from a melt-down gasifier by way of a hot cyclone and dust bunkers, which are integrated into a pipeline system, characterized in that there is provided between the hot-gas cyclone (1) and a burner (5) located at the melt-down gasifier (7) a sluice system which has in succession an upper dust bunker (2a), a lower dust bunker (2b) and a cellular-wheel sluice (4), slides (3a, 3b) being arranged therebetween.

3. Apparatus according to Claim 2, characterized in that the hot-gas cyclone (1) is designed as a welded structure made from sheet steel with a brick lining.

4. Apparatus according to Claim 2, characterized in that the upper dust bunker (2a) and the lower dust bunker (2b) are designed as pressure vessels, the pressure vessel being formed from a sheet-metal structure with a brick lining.

5. Apparatus according to Claim 4, characterized in that radioactive measuring probes for determining the filling level of the dust (1a) are arranged in the dust bunkers (2a; 2b).

6. Apparatus according to Claim 2, characterized in that the hot-dust slide (3b) has a slide housing (8) with a milled labyrinth design (9) for the low-loss water conveyance of the cooling water.

7. Apparatus according to Claim 2 and 6, characterized in that the hot-dust slide (3b) has a water-cooled slide shaft (10) and the slide plate (13) is moved by means of pneumatic cylinders.

8. Apparatus according to Claim 2, characterized in that the hot-dust slide (3b) has a slide shaft (10) which is mounted by means of a ball seat (11) and a gland (12).

9. Apparatus according to Claim 2, characterized in that the hot-dust slide (3b) has a slide plate (13) and slideways (14) for the slide plate (13), the slide plate (13) and the slideways (14) being coated with hard or sintered metal.

10. Apparatus according to Claim 2 and 6, characterized in that the inflow and outflow connection pieces of the hot-dust slide (3b) are provided with inner tubes made of heat-resistant steel with ceramic-cord sheathing.

11. Apparatus according to Claim 2, characterized in that the cellular-wheel sluice (4) has complete water cooling of the housing, rotor and cellular wheel with shaft.

12. Apparatus according to Claim 11, characterized in that the rotor is designed conically and is provided with welded armouring made from a high-temperature hard cobalt alloy.

13. Apparatus according to Claim 11 and 12, characterized in that the rotor can be readjusted in order to maintain leakproofing.

14. Apparatus according to Claim 2, characterized in that the burners (5) are fully water-cooled.

15. Apparatus according to Claim 2, characterized in that the connecting pipe segments (6) having heat-resistant inner tubes are equipped with ceramic-cord sheathing.

## Revendications

1. Procédé pour la réinjection de poussières chaudes en provenance d'un carburateur ou d'un carburateur de fusion à travers un cyclone à chaud intégré dans un système de tuyauterie, ainsi qu'une trémie à charbon pulvérisé,
caractérisé en ce que,
la poussière chaude (1a) en provenance du cyclone à gaz chaud (1), une zone à plus faible pression, est conduite au moyen d'un injecteur (5a) à travers des brûleurs (5) jusqu'au carburateur de fusion (7), en franchissant la différence de pression par rapport au carburateur de fusion (7) à travers un système de sas (2a; 2b; 3a; 3b; 4) dans lequel le système de sas présente, dans l'ordre, une trémie à charbon pulvérisé haute (2a) et une trémie à charbon pulvérisé basse (2b), et un sas à roue cellulaire (4) pouvant être séparés les uns des autres au moyen de tiroirs (3a et 3b).

2. Installation pour la réinjection de poussières chaudes en provenance d'un carburateur de fusion à travers un cyclone à chaud intégré dans un système de tuyauterie, ainsi qu'une trémie à charbon pulvérisé,
caractérisée en ce que,
entre le cyclone à gaz chaud (1) et un brûleur (5), qui est relié au carburateur de fusion (7), on a prévu un système de sas, qui, dans l'ordre, présente une trémie à charbon pulvérisé haute (2a), une trémie à charbon pulvérisé basse (2b), et un sas à roue cellulaire (4), entre lesquels on a placé des tiroirs (3a, 3b).

3. Installation selon la revendication 2, caractérisée en ce que,le cyclone à gaz chaud (1) est fabriqué en tôles d'acier par construction soudée avec garnissage.

4. Installation selon la revendication 2, caractérisée en ce que, la trémie à charbon pulvérisé haute (2a) et la trémie à charbon pulvérisé basse (2b) sont construites comme cuves sous pression, dans laquelle la cuve sous pression est constituée d'une construction en acier avec garnissage.

5. Installation selon la revendication 4, caractérisée en ce que, l'on a installé dans les trémies à charbon pulvérisé (2a; 2b) des sondes de mesure radioactives pour la détection de la hauteur de poussière de remplissage (1a).

6. Installation selon la revendication 2, caractérisée en ce que, le tiroir à poussière chaude (3b) présente un boîtier de vanne (8) avec construction d'un labyrinthe fraisé (9) servant de conduite d'eau à faible perte pour l'eau de refroidissement.

7. Installation selon les revendications 2 et 6, caractérisée en ce que, le tiroir à poussière chaude (3b) présente un arbre de tiroir refroidi par eau (10), et en ce que le siège de tiroir (13) est actionné au moyen d'un cylindre pneumatique.

8. Installation selon la revendication 2, caractérisée en ce que, le tiroir à poussière chaude (3b) présente un arbre de tiroir (10), qui est équipé d'un siège à bille (11) et d'un presse-étoupe (12).

9. Installation selon la revendication 2, caractérisée en ce que, le tiroir à poussière chaude (3b) présente un plateau de tiroir (13) et des glissières (14) pour le plateau de tiroir (13), dans laquelle le plateau de tiroir (13) et les glissières (14) sont revêtues avec du métal dur ou fritté.

10. Installation selon les revendications 2 et 6, caractérisée en ce que, les buses d'amenée et d'écoulement du tiroir à poussière chaude (3b) sont munies de tuyaux intérieurs en acier résistant à la chaleur avec chemisage à cordon de céramique.

11. Installation selon la revendication 2, caractérisée en ce que, le sas à roue cellulaire (4) présente un refroidissement complet par eau du boîtier, du rotor et de la roue cellulaire comprenant l'arbre.

12. Installation selon la revendication 11, caractérisée en ce que, le rotor est réalisé sous forme conique et est muni d'un blindage en alliage de cobalt résistant aux hautes températures.

13. Installation selon les revendications 11 et 12, caractérisée en ce que, le rotor est ajustable pour conserver l'étanchéité.

14. Installation selon la revendication 2, caractérisée en ce que, les brûleurs (5) sont complètement refroidis par eau.

15. Installation selon la revendication 2, caractérisée en ce que, la tuyauterie de liaison (6)est équipée de tuyaux intérieurs résistants à la chaleur comprenant un chemisage à cordon de céramique.
